Europäisches Patentamt

European Patent Office

Office européen des brevets

(11) Veröffentlichungsnummer: **0 360 038 B1**

## (12) EUROPÄISCHE PATENTSCHRIFT

(45) Veröffentlichungstag der Patentschrift: **16.02.94**

(21) Anmeldenummer: **89115873.5**

(22) Anmeldetag: **29.08.89**

(51) Int. Cl.5: **C08F 210/02**, C08F 2/44,
C08F 8/32, //(C08F210/02,
220:04)

(54) Verfahren zur Herstellung von aminomodifizierten Ethylen-Carbonsäure-Copolymerisaten, derartige Copolymerisate und ihre Verwendung für Haftvermittler und Kabelummantelungen.

(30) Priorität: **03.09.88 DE 3830007**

(43) Veröffentlichungstag der Anmeldung:
**28.03.90 Patentblatt 90/13**

(45) Bekanntmachung des Hinweises auf die
Patenterteilung:
**16.02.94 Patentblatt 94/07**

(84) Benannte Vertragsstaaten:
**AT BE DE ES FR GB IT NL**

(56) Entgegenhaltungen:
**GB-A- 755 167          GB-A- 1 023 281
US-A- 3 145 195         US-A- 3 476 722
US-A- 3 520 861         US-A- 4 351 931**

(73) Patentinhaber: **BASF Aktiengesellschaft
Carl-Bosch-Strasse 38
D-67063 Ludwigshafen(DE)**

(72) Erfinder: **Hasenbein, Norbert, Dr.
Neuoettinger Strasse 4
D-6716 Dirmstein(DE)**
Erfinder: **Mühlenbernd, Thomas, Dr.
Siegelsmauer 3a
D-6900 Heidelberg(DE)**
Erfinder: **Koehler, Gernot, Dr.
Calvinstrasse 7c
D-6520 Worms(DE)**

**Beschreibung**

Die Erfindung betrifft ein Verfahren zur Herstellung von hochmolekularen Ethylencopolymerisaten mit Schmelzindices von weniger als 40 g/10 min durch Copolymerisation von Ethylen mit $\alpha,\beta$-ethylenisch ungesättigten Carbonsäuren, Carbonsäureanhydriden und/oder deren Derivaten in einem Polymerisationssystem bei Drücken von 500 bis 5000 bar und Temperaturen von 40 bis 350 °C in Anwesenheit von radikalisch zerfallenden Polymerisationsinitiatoren und gegebenenfalls Molekulargewichtsreglern.

Bei derartigen Verfahren entstehen hochmolekulare, Carboxylgruppen enthaltende Ethylencopolymerisate, die als Haftvermittler oder in Kabelummantelungen verwendet werden können oder, nach Neutralisation mit anorganischen oder organischen Salzen, in Ionomere überführt werden können.

Es ist bereits bekannt, hochmolekulare, aminmodifizierte Copolymerisate von Ethylen und $\alpha,\beta$-ethylenisch ungesättigten Carbonsäuren, Carbonsäureanhydriden und/oder deren Derivaten mit ionomerem Charakter dadurch herzustellen, daß man zunächst ein Copolymerisat aus Ethylen und einer $\alpha,\beta$-ethylenisch ungesättigten Carbonsäure, z.B. gemäß US-Patenten 3520861, 3201374 oder 3350372, herstellt und dieses Copolymerisat mit einem Monoamin in einem zweiten gesonderten Reaktionsschritt umsetzt (vgl. z.B. die US-Patente 3404134, 3471460, 3541033 oder 3790521).

Obwohl dermaßen hergestellte aminmodifizierte Copolymerisate teilweise gute anwendungstechnische Eigenschaften haben, wie gute elektrische Isoliereigenschaften, läßt ihre Homogenität oft zu wünschen übrig. Insbesondere enthalten daraus hergestellte Folien noch Stippen und die Reißfestigkeitswerte sind ungenügend. Außerdem ist die Herstellung der Ausgangscopolymerisate aufgrund der stark unterschiedlichen Copolymerisationsparameter von Ethylen und Carbonsäure, wie z.B. Acrylsäure, recht schwierig und erfordert oft besondere verfahrenstechnische Maßnahmen (vgl. US-A-4690981 und EP-B1-0115190). Ebenso schwierig ist die anschließende Umsetzung zu dem Ionomeren. Gemäß EP-A-193 110 werden extrem lange Reaktionsextruder benötigt, die auch noch zur Erzielung einer guten Homogenität als Zweiwellenextruder ausgerüstet sein müssen. Solche aufwendigen und teuren Reaktionsapparaturen stehen aber nicht immer zur Verfügung. Außerdem setzt das nochmalige Aufschmelzen unter Scherbeanspruchung das Polymerisat einer starken Belastung aus, und es kommt zu einem Polymer abbau bzw. zu einer irreversiblen Vernetzung.

Es ist auch bereits bekannt, bei der Homopolymerisation von Ethylen mit anderen ungesättigten Verbindungen bei hohem Druck und hoher Temperatur in Gegenwart von Polymerisationsinitiatoren dem Ethylen vor der Kompression einen Polymerisationsverzögerer zuzusetzen, um eine vorzeitige Polymerisation des Ethylens zu verhindern. Derartige Zusätze können aus substituierten Phenylaminen, z. B. aus Triphenylamin bestehen (vgl. GB-A-760178). Die Polymerisationsverzögerer sind in sehr geringen Mengen zugegen und ihre Anwendung bei der Copolymerisation von Ethylen mit Acrylsäure ist nicht versucht worden.

Ferner ist es bereits aus der EP-A-223182 bekannt, ionomermodifizierte Ethylen-Carbonsäure-Copolymerisate durch Copolymerisation unter Hochdruckbedingungen in Gegenwart eines Salzes einer Carbonsäure herzustellen, wobei allerdings lediglich die relativ inhomogenen Metallsalze der entsprechenden Copolymerisate entstehen.

Daher bestand die Aufgabe, ein Verfahren zur Herstellung von aminmodifizierten hochmolekularen Ethylencopolymerisaten zu finden, bei dem die Herstellung in einem Schritt erfolgt und bei dem die Produkte eine erhöhte Homogenität, ausgezeichneten Glanz, gute Transparenz und Durchstoßfestigkeit der Folien besitzen.

Diese Aufgabe wurde durch das eingangs beschriebene Verfahren gelöst, wobei erfindungsgemäß zusätzlich in Gegenwart eines einwertigen tertiären organischen Amins copolymerisiert wird.

Vorteilhaft wird in Gegenwart von mindestens 10 mol-% bis zu einem leichten molaren Überschuß an Amin, bezogen auf die Menge an ungesättigter Carbonsäureverbindung copolymerisiert.

Bevorzugt wird in Gegenwart von 10 bis 100, insbesondere 30 bis 95 Mol.-%, bezogen auf die eingesetzte ungesättigte Carbonsäureverbindung, des tertiären organischen Amins copolymerisiert.

Die Aufgabe wurde ferner gelöst durch hochmolekulare Ethylencopolymerisate, die nach obigem Verfahren durch einwertige tertiäre Amine modifiziert worden waren.

Die Copolymerisation kann in jedem beliebigen Hochdruckpolymerisationsreaktor durchgeführt werden. Es kommen Autoklaven, Autoklav-Rohrreaktor-Kombinationen und insbesondere auch einfache Einzonen-Rohrreaktoren in Frage. Dies ist überraschend, da die Herstellung von einigermaßen homogenen Ethylencopolymeren ohne vorherige Aminmodifizierung, insbesondere bei hohen Comonomerkonzentrationen sonst nur im Autoklaven durchgeführt werden kann.

Obwohl es sich bei dem erfindungsgemäß bevorzugt zu verwendenden rohrförmigen Reaktor um einen Einzonen-Rohrreaktor handelt, kommen auch andere Reaktoren in Frage, z.B. Rohrreaktoren mit Kaltgasnachdosierung, Autoklaven oder Kombinationen der verschiedenen Reaktortypen.

Als radikalisch zerfallende Polymerisationsinitiatoren werden für die Copolymerisation gemäß dem vorliegenden Verfahren bevorzugt tert.-Butylperoxypivalat und tert.-Butylperisononanoat zugeführt. Es können aber auch beliebige Peroxide bzw. Peroxidkombinationen und/oder Sauerstoff als Initiatoren eingesetzt werden. Zusätzlich können übliche Molekulargewichtsregler wie Propionaldehyd eingesetzt werden.

Als geeignete inerte Lösungsmittel für das tert.-Butylperoxypivalat oder der anderen Peroxide werden zweckmäßig aliphatische Kohlenwasserstoffe wie Octan oder deren Mischungen, z.B. Benzin verwendet. Es können gegebenenfalls auch andere inerte Lösungsmittel, wie Chlorbenzol, Cyclohexan oder Methanol, eingesetzt werden. Die für das Zuführen der Initiatoren erforderlichen Mengen an Lösungsmittel sind im Verhältnis zur Menge Ethylen gering und betragen im allgemeinen jeweils 0,01 bis 5 Gew.%, vorzugsweise 0,1 bis 2 Gew.%, bezogen auf die Menge Ethylen. Die Initiatoren enthaltende Lösung wird dabei an den oben angegebenen Stellen, zweckmäßig mit Hilfe von schnell laufenden Dosierpumpen direkt in das Reaktionsgemisch eindosiert (vgl. EP-A-101 875).

Nach bevorzugter Verfahrensweise wird Ethylen zusammen mit einer Mischung bestehend aus dem tertiären Amin und einer $\alpha,\beta$-ethylenisch ungesättigten Carbonsäure oder einem Carbonsäureanhydrid und/oder deren Derivaten, wobei die Acrylsäure und Methacrylsäure bevorzugt sind, insbesondere Acrylsäure, auf die Saugseite eines Hochdrucknachverdichters dosiert. Dort wird die Mischung aus Ethylen, Amin und den Comonomeren auf den Reaktionsdruck komprimiert.

Die Copolymerisation des Ethylens zusammen mit den anderen Carbonsäureverbindungen erfolgt wie üblich bei Drücken von 500 bis 5000 bar, vorzugsweise 1500 bis 3000 bar. Die Temperaturen im Polymerisationssystem liegen zwischen 40 und 350°C, vorzugsweise zwischen 100 und 350°C. Die mittleren Verweilzeiten betragen üblicherweise 30 bis 120 Sekunden. Dabei ist die mittlere Verweilzeit definiert durch das Verhältnis des Apparatevolumens zu dem im Mittel pro Zeiteinheit durch das Apparatevolumen hindurchgetretene Produktvolumen. Die Bedingungen im Polymerisationssystem lassen sich apparativ am günstigsten in sogenannten Rohrreaktoren einstellen. Unter Rohrreaktoren versteht man rohrförmige Polymerisationsgefäße, deren Längenausdehnung das über 2000fache, bevorzugt das 5000- bis 50 000fache des Rohrdurchmessers beträgt. Bevorzugt wird ein Teil der Polymerisationswärme durch Kühlung des Rohrreaktors von außen mit Wasser abgeführt. Die Polymerisation des Ethylens bzw. des Ethylens mit Comonomeren im Rohrreaktor wird kontinuierlich betrieben (vgl. "Ullmann's Encyklopädie der technischen Chemie", Verlag Chemie GmbH, D-6940 Weinheim, Band 19, (1980), Seiten 169 bis 195).

Als ethylenisch ungesättigte Carbonsäuren und/oder deren Derivate kommen insbesondere Verbindungen wie Maleinsäure, Fumarsäure, Itaconsäure, Acrylsäure, Acrylsäureanhydrid, Methacrylsäure, Crotonsäure, Maleinsäurehanhydrid, Itaconsäureahydrid, in Betracht. Bevorzugte Verbindungen sind Methacrylsäure und Acrylsäure und insbesondere Acrylsäure. Die Comonomeren werden in Mengen von 1 bis 30, bevorzugt von 1 bis 5 Gew.%, bezogen auf das Ethylencopolymerisat, einpolymerisiert.

Nach erfindungsgemäßem Verfahren wird zusätzlich zum Initiator und ggf. Molekulargewichtsregler in Gegenwart eines einwertigen tertiären organischen Amins, vorteilhaft in Mengen von 10 bis etwa 100, insbesondere 10 bis 100 mol-% und bevorzugt 30 bis 95 Mol.-%, bezogen auf die eingesetzte ungesättigte Carbonsäureverbindung, copolymerisiert.

Als Amine kommen insbesondere aliphatische tertiäre organische Amine und bevorzugt Trialkylamine it 1 bis 18 C-Atomen im Alkylrest wie Trimethylamin, Triethylamin, Tri-n-propylamin, Tri-n-butylamin oder Dimethyl-($C_{10}$/$C_{18}$-alkyl)-amin, in Betracht, wobei Tributylamin und Dimethyl-($C_{10}$/$C_{18}$-alkyl)-amin, insbesondere aber Dimethyl-($C_{10}$/$C_{18}$-alkyl)-amin, bevorzugt sind. Unter Dimethyl-($C_{10}$/$C_{18}$-alkyl)-amin sind dabei N,N-Dimethyl-N-alkyl-amine zu verstehen, wobei der Alkylrest 10 bis 18 Kohlenstoffatome enthält und meist ein Gemisch solcher Alkylreste darstellt. Dabei kann das Amin im bevorzugten Bereich im Vergleich zur ethylenisch ungesättigten Carbonsäure im leichten molaren Überschuß, d.h. bis zu einem überschuß von etwa 15 mol-%, vorliegen, bevorzugt befindet sich aber das Amin im Unterschuß.

Die erfindungsgemäßen amin-modifizierten Ethylencopolymerisate weisen Schmelzindexwerte von weniger als 40, bevorzugt 4 bis 40 g/10 min nach DIN 53 735 auf. Die Dichten der Copolymerisate können frei eingestellt werden und liegen bevorzugt zwischen 0,922 bis 0,928 g/cm³.

Die mit der Erfindung erzielten Vorteile sind insbesondere darin zu sehen, daß aminmodifizierte Ethylencopolymerisate in einem Verfahrensschritt hergestellt werden können, wobei Copolymerisate mit verbesserter Homogenität gegenüber vergleichbaren Copolymerisaten erhalten werden. Folien aus den erfindungsgemäß hergestellten Copolymerisaten besitzen eine ausgezeichnete Durchstoßfestigkeit, Glanz und Transparenz und sind stippenfrei. Die Copolymerisate können zur Herstellung von Haftvermittlern oder Kabelummantelungen verwendet werden. Die Verwendung von Ethylen-Acrylsäure-Copolymerisaten zur Herstellung von Haftvermittlern oder Kabelummantelungen ist an sich bekannt und z.B. in den Druckschriften US-A-4 092 488, DE-A-3 607 756, GB-A-2 081 723 und US-A-4 487 885 beschrieben.

In den folgenden Beispielen wird das erfindungsgemäße Verfahren näher beschrieben.

Beispiele

Die Copolymerisation wurde in allen Fällen in einem rohrförmigen Reaktor mit einem Längen-/Durchmesser-Verhältnis von etwa 25.000 durchgeführt. Zur Abführung der Polymerisationswärme wurden die Rohrwände von außen mit Wasser gekühlt. Die Ethylen/Amin/Carbonsäure-Mischung wurde mit dem Molgewichtsregler Propionaldehyd versetzt, auf den Reaktionsdruck komprimiert und der Einlaßstelle des Reaktors zugeführt. Zusätzlich wurde an der Einlaßstelle des Reaktors eine Lösung von tert.-Butylperoxypivalat und tert.-Butylperisononanoat in Verdünnungsmittel (Benzin) dazugegeben.

Das Molekulargewicht der Produkte wird mit dem Molekulargewichtsregler so eingestellt, daß der Schmelzindexwert 10 g/10 min (bestimmt nach DIN 53 735) beträgt.

Beispiel 1

5,1 l/h Acrylsäure und 2,7 l/h Tri-n-Butylamin wurden zusammen mit 2,3 t/h Ethylen auf die Saugseite eines Hochdrucknachverdichters dosiert, auf den Reaktionsdruck von 2800 bar komprimiert und auf 145°C erwärmt. An der Einlaßstelle des Rohrreaktors wurde 1,3 ppm/h tert.-Butylperpivalat, 1,1 ppm/h tert.-Butylperisononanoat, bezogen auf das eingesetzte Ethylen, eingespritzt und die Copolymerisation initiiert. Das Temperaturmaximum betrug 250°C. Das entstandene Copolymerisat wurde über die üblichen Abscheidersysteme vom nicht umgesetzten Ethylen abgetrennt und über einen einfachen Einwellenextruder KE 150 der Firma Berstorff ausgetragen. Das Produkt ist sehr homogen und vollkommen farblos. Folien, die aus diesem Produkt hergestellt werden, sind stippenfrei, hochglänzend und haben eine ausgezeichnete Durchstoßfestigkeit.

Beispiel 2

10,2 l/h Acrylsäure und 40,4 l/h eines Gemisches von N,N-Dimethyl-N-$C_{10}$/$C_{18}$-alkyl)amin (wobei $C_{10}$/$C_{18}$-alkyl ein Gemisch von Alkylresten von 10 bis 18 C-Atomen darstellt) wurden zusammen mit 2,3 t/h Ethylen auf die Saugseite eines Hochdrucknachverdichters dosiert, auf den Reaktionsdruck von 2800 bar komprimiert und auf 145°C erwärmt. An der Einlaßstelle des Rohrreaktors wurde 1,5 ppm/h tert.-Butylperpivalat, 1,3 ppm/h tert.-Butylperisononanoat, bezogen auf das eingesetzte Ethylen, eingespritzt und die Copolymerisation initiiert. Das Temperaturmaximum betrug 250°C. Das entstandene Copolymerisat wurde über die üblichen Abscheidersysteme vom nicht umgesetzten Ethylen abgetrennt und über einen einfachen Einwellenextruder KE 150 der Firma Berstorff ausgetragen. Das Produkt ist sehr homogen und vollkommen farblos. Folien, die aus diesem Produkt hergestellt werden, sind stippenfrei, hoch glänzend und haben eine ausgezeichnete Durchstoßfestigkeit.

Vergleichsversuch A

5,1 l/h Acrylsäure wurden zusammen mit 2,3 t/h Ethylen auf die Saugseite eines Hochdrucknachverdichters dosiert, auf den Reaktionsdruck von 2800 bar komprimiert und auf 145°C erwärmt. An der Einlaßstelle des Rohrreaktors wurde 1,3 ppm/h tert.-Butylperpivalat, 1,3 ppm/h tert.-Butylperisononanoat, bezogen auf das eingesetzte Ethylen eingespritzt und die Copolymerisation initiiert. Das Temperaturmaximum betrug 250°C. Das entstandene Copolymerisat wurde über die üblichen Abscheidersysteme vom nicht umgesetzten Ethylen abgetrennt und über einen einfachen Einwellenextruder KE 150 der Firma Berstorff ausgetragen. Daraus hergestelle Folien sind sehr inhomogen und enthalten viele Stippen.

Anschließend wurde das Ethylen-Acrylsäurecopolymerisat mit Tri-n-butylamin nach dem in der EP-A-193 110 beschriebenen Verfahren zum aminmodifizierten Ionomer umgesetzt. Es enthält noch viele Stippen und die Durchstoßfestigkeit ist geringer als von solchen Produkten, die gemäß Beispiel 1 erhalten werden.

Tabelle

| | Stippenpegel | Glanz* SKT | DDI** [g] |
|---|---|---|---|
| Beispiel 3 | niedrig | 60 | 80 |
| Vergleichsversuch A | hoch | 20 | 50 |

\* bestimmt gemäß ASTM D 523/80

\*\* Dart Drop Impact, bestimmt gemäß ASTM 1709 unter einem Winkel von 20°

Vergleichsversuch B

10,2 l/h Acrylsäure wurden zusammen mit 2,3 t/h Ethylen auf die Saugseite eines Hochdrucknachverdichters dosiert, auf den Reaktionsdruck von 2800 bar komprimiert und auf 145°C erwärmt. An der Einlaßstelle des Rohrreaktors wurden 1,5 ppm/h tert.-Butylperpivalat, 1,3 ppm/h tert.-Butylperisononanoat, bezogen auf das eingesetzte Ethylen, eingespritzt und die Copolymerisation initiiert.

Es konnte kein Produkt isoliert werden, da schon nach kurzer Zeit die Reaktorrohre vermutlich infolge von Polyacrylsäureblockbildung verstopften. Die anschließende Umsetzung mit einem tertiären Amin mußte unterbleiben.

**Patentansprüche**
**Patentansprüche für folgende Vertragsstaaten : AT, BE, DE, FR, GB, IT, NL**

1.  Verfahren zur Herstellung von hochmolekularen Ethylencopolymerisaten mit Schmelzindices von weniger als 40 g/10 min durch Copolymerisation von Ethylen mit $\alpha,\beta$-ethylenisch ungesättigten Carbonsäuren, Carbonsäureanhydriden und/oder deren Derivaten in einem Polymerisationssystem bei Drücken von 500 bis 5000 bar und Temperaturen von 40 bis 350°C in Anwesenheit von radikalisch zerfallenden Polymerisationsinitiatoren und gegebenenfalls Molekulargewichtsreglern, dadurch gekennzeichnet, daß zusätzlich in Gegenwart eines einwertigen tertiären organischen Amins copolymerisiert wird.

2.  Verfahren nach Anspruch 1, dadurch gekennzeichnet, daß in Gegenwart von 10 bis etwa 100 Mol.-%, bezogen auf die eingesetzte ungesättigte Carbonsäureverbindung, des tertiären organischen Amins copolymerisiert wird.

3.  Verfahren nach Anspruch 1, dadurch gekennzeichnet, daß in Gegenwart von aliphatischen tertiären organischen Aminen copolymerisiert wird.

4.  Verfahren nach Anspruch 3, dadurch gekennzeichnet, daß in Gegenwart eines Trialkylamins, das Alkylreste mit 1 bis 18 C-Atomen enthält, copolymerisiert wird.

5.  Mit einwertigen tertiären organischen Aminen modifiziertes hochmolekulares Ethylencopolymerisat, das gemäß dem Verfahren von Anspruch 1 hergestellt ist.

6.  Verwendung der mit einwertigen tertiären organischen Aminen modifizierten Ethylencopolymerisate, die gemäß dem Verfahren von Anspruch 1 hergestellt sind, zur Herstellung von Haftvermittlern.

7.  Verwendung der mit einwertigen tertiären organischen Aminen modifizierten Ethylencopolymerisate, die gemäß dem Verfahren nach Anspruch 1 hergestellt sind, zur Herstellung von Kabelummantelungen.

EP 0 360 038 B1

**Patentansprüche für folgenden Vertragsstaat : ES**

**1.** Verfahren zur Herstellung von hochmolekularen Ethylencopolymerisaten mit Schmelzindices von weniger als 40 g/10 min durch Copolymerisation von Ethylen mit α,β-ethylenisch ungesättigten Carbonsäuren, Carbonsäureanhydriden und/oder deren Derivaten in einem Polymerisationssystem bei Drücken von 500 bis 5000 bar und Temperaturen von 40 bis 350°C in Anwesenheit von radikalisch zerfallenden Polymerisationsinitiatoren und gegebenenfalls Molekulargewichtsreglern, dadurch gekennzeichnet, daß zusätzlich in Gegenwart eines einwertigen tertiären organischen Amins copolymerisiert wird.

**2.** Verfahren nach Anspruch 1, dadurch gekennzeichnet, daß in Gegenwart von 10 bis etwa 100 Mol.-%, bezogen auf die eingesetzte ungesättigte Carbonsäureverbindung, des tertiären organischen Amins copolymerisiert wird.

**3.** Verfahren nach Anspruch 1, dadurch gekennzeichnet, daß in Gegenwart von aliphatischen tertiären organischen Aminen copolymerisiert wird.

**4.** Verfahren nach Anspruch 3, dadurch gekennzeichnet, daß in Gegenwart eines Trialkylamins, das Alkylreste mit 1 bis 18 C-Atomen enthält, copolymerisiert wird.

**Claims**
**Claims for the following Contracting States : AT, BE, DE, FR, GB, IT, NL**

**1.** A process for preparing a high molecular weight ethylene copolymer having a melt flow index of less than 40 g/10 min by copolymerization of ethylene with an α,β-ethylenically unsaturated carboxylic acid or anhydride or a derivative thereof in a polymerization system at pressures of from 500 to 5,000 bar and temperatures of from 40 to 350°C in the presence of a free-radical polymerization initiator and in the presence or absence of a molecular weight regulator, which comprises copolymerizing in the additional presence of a tertiary organic monoamine.

**2.** A process as claimed in claim 1, wherein the copolymerization is carried out in the presence of from 10 to about 100 mol%, based on the unsaturated carboxylic acid compound used, of the tertiary organic amine.

**3.** A process as claimed in claim 1, wherein the copolymerization is carried out in the presence of an aliphatic tertiary organic amine.

**4.** A process as claimed in claim 3, wherein the copolymerization is carried out in the presence of a trialkylamine which contains alkyls of from 1 to 18 carbon atoms.

**5.** A high molecular weight ethylene copolymer modified with a tertiary organic monoamine by the process of claim 1.

**6.** The use of an ethylene copolymer modified with a tertiary organic monoamine by the process of claim 1, for producing adhesion promoters.

**7.** The use of an ethylene copolymer modified with a tertiary organic monoamine by the process of claim 1, for producing cable sheathing.

**Claims for the following Contracting State : ES**

**1.** A process for preparing a high molecular weight ethylene copolymer having a melt flow index of less than 40 g/10 min by copolymerization of ethylene with an α,β-ethylenically unsaturated carboxylic acid or anhydride or a derivative thereof in a polymerization system at pressures of from 500 to 5,000 bar and temperatures of from 40 to 350°C in the presence of a free-radical polymerization initiator and in the presence or absence of a molecular weight regulator, which comprises copolymerizing in the additional presence of a tertiary organic monoamine.

6

2. A process as claimed in claim 1, wherein the copolymerization is carried out in the presence of from 10 to about 100 mol%, based on the unsaturated carboxylic acid compound used, of the tertiary organic amine.

3. A process as claimed in claim 1, wherein the copolymerization is carried out in the presence of an aliphatic tertiary organic amine.

4. A process as claimed in claim 3, wherein the copolymerization is carried out in the presence of a trialkylamine which contains alkyls of from 1 to 18 carbon atoms.

**Revendications**
**Revendications pour les Etats contractants suivants : AT, BE, DE, FR, GB, IT, NL**

1. Procédé de préparation de copolymères d'éthylène de haut poids moléculaire avec des indices de fusion de moins de 40 g/10 mn, Par copolymérisation d'éthylène avec des acides carboxyliques ou leurs anhydrides à insaturation $\alpha,\beta$-éthylénique et/ou leurs dérivés, dans un système de polymérisation sous des pressions de 500 à 5000 bar et des températures de 40 à 350°C en présence d'amorceurs de polymérisation se décomposant en radicaux libres et éventuellement de régulateurs de poids moléculaire, caractérisé en ce que l'éthylène est également copolymérisé en présence d'une monoamine organique tertiaire.

2. Procédé selon la revendication 1, caractérisé en ce qu'on effectue la copolymérisation en présence de 10 à environ 100% en moles de l'amine organique tertiaire par rapport au dérive d'acide carboxylique insaturé mis en réaction.

3. Procédé selon la revendication 1, caractérisé en ce qu'on effectue la copolymérisation en présence d'amines organiques tertiaires aliphatiques.

4. Procédé selon la revendication 3, caractérisé en ce qu'on effectue la copolymérisation en présence d'une trialkylamine dont les restes alkyle contiennent de 1 à 18 atomes de carbone.

5. Copolymère d'éthylène à haut poids moléculaire modifié par des monoamines organiques tertiaires, qui a été préparé par le procédé selon la revendication 1.

6. Utilisation des copolymères d'éthylène modifiés par des monoamines organiques tertiaires, qui ont été préparés selon le procédé de la revendication 1, pour la préparation d'adhésifs.

7. Utilisation des copolymères d'éthylène modifiés par des monoamines organiques tertiaires qui ont été préparés selon le procédé de la revendication 1, pour la préparation de gaines isolantes de cables.

**Revendications pour l'Etat contractant suivant : ES**

1. Procédé de préparation de copolymères d'éthylène de haut poids moléculaire avec des indices de fusion de moins de 40 g/10 mn, par copolymérisation d'éthylène avec des acides carboxyliques ou leurs anhydrides à insaturation $\alpha,\beta$-éthylénique et/ou leurs dérivés, dans un système de polymérisation sous des pressions de 500 à 5000 bar et des températures de 40 a 350°C en présence d'amorceurs de polymérisation se décomposant en radicaux libres et éventuellement de régulateurs de poids moléculaire, caractérisé en ce que l'éthylène est également copolymérisé en présence d'une monoamine organique tertiaire.

2. Procédé selon la revendication 1, caractérisé en ce qu'on effectue la copolymérisation en présence de 10 à environ 100% en moles de l'amine organique tertiaire par rapport au dérivé d'acide carboxylique insaturé mis en réaction.

3. Procédé selon la revendication 1, caractérisé en ce qu'on effectue la copolymérisation en présence d'amines organiques tertiaires aliphatiques.

7

4. Procédé selon la revendication 3, caractérisé en ce qu'on effectue la copolymérisation en présence d'une trialkylamine dont les restes alkyle contiennent de 1 à 18 atomes de carbone.